# EUROPÄISCHE PATENTANMELDUNG

(11) **EP 0 673 884 A2**
(43) Veröffentlichungstag der Anmeldung: **27.09.1995**
(21) Anmeldenummer: 95810069.5
(22) Anmeldetag: 02.02.1995
(51) Int. Cl.: C02F 1/62, C02F 1/58, C02F 1/22

(54) **Verfahren zum Entfernen von anorganischen Metallverbindungen aus Lösungen**

(30) Priorität: 25.03.1994 DE 4410347
(71) Anmelder: Leutwyler, René, CH-5506 Mägenwil (CH)
(72) Erfinder: Leutwyler, René, CH-5506 Mägenwil (CH)
(74) Vertreter: Rottmann, Maximilian R.

(57) **Zusammenfassung**

Anorganische Metallverbindungen, insbesondere Salze, Oxyde oder Hydroxyde, werden aus cyanidhaltigen Elektrolyten und anderen Lösungen entfernt, indem der Lösung mindestens ein Teil ihrer Flüssigkeit entnommen und die entnommene Flüssigkeit in einem Kühlbehälter unter Rühren im Gebiet des metastabilen Bereiches bis zum möglichen Auskristallisieren der Salze bzw. Hydroxyde abgekühlt wird. Der so abgekühlten Lösung wird zur Einleitung der Kristallisation stossweise Energie zugeführt. Die auskristallisierten Metallverbindungen werden von der Flüssigkeit abgetrennt und die abgetrennte Flüssigkeit wird in die Lösung zurückgeleitet. Geeignete Energieträger für die stossweise Energiezufuhr sind insbesondere: Ultraschall, Gleichstrom, Wechselstrom, Mikrowellen, Magnetismus, Laserstrahlen, Infrarotstrahlen; und Ultraviolettstrahlen. Zweckmässig erfolgt dabei die Abkühlung bis zum Auftreten der durch das Freiwerden der Kristallisationswärme bedingten exothermen Reaktion; anschliessend wird die Temperatur vor dem Abtrennen der Metallverbindungen noch 2 bis 4 Minuten bei 0,5 bis 1 °C unterhalb dieser Temperatur gehalten. Die Kühlgeschwindigkeit beträgt vorzugsweise -0,5 °C/Minute, bei geringer Rührerdrehzahl.

## Beschreibung

Die Erfindung betrifft das in den Ansprüchen 1 bis 4 umschriebene Verfahren zum Entfernen von anorganischen Metallverbindungen, insbesondere Salzen, Oxyden oder Hydroxyden, aus Lösungen.

Bisher galt ein Entfernen störender Zersetzungsprodukte aus Elektrolyten und Abwässern von Galvaniken, Feuerverzinkereien, Härtereien und anderen Industriebetrieben ohne Produktionsunterbrechung für nicht durchführbar.

Aufgabe der Erfindung ist daher die Schaffung eines Verfahrens welches eine solche Entfernung störender Zersetzungsprodukte ohne Produktionsunterbrechung gestattet.

Das erfindungsgemässe Verfahren zum Entfernen von anorganischen Metallverbindungen, insbesondere von Salzen, Oxyden oder Hydroxyden, aus Lösungen durch Abkühlen der Lösung, ist nun dadurch gekennzeichnet, dass:
- der Lösung mindestens ein Teil ihrer Flüssigkeit entnommen wird;
- die entnommene Flüssigkeit in einem Kühlbehälter unter Rühren im Gebiet des metastabilen Bereiches bis zum möglichen Auskristallisieren der Metallverbindungen abgekühlt wird;
- der so abgekühlten Lösung zur Einleitung der Kristallisation stossweise Energie zugeführt wird;
- die auskristallisierten Metallverbindungen von der Flüssigkeit abgetrennt werden; und
- die abgetrennte Flüssigkeit in die Lösung zurückgeleitet wird.

Die Energiezufuhr kann mittels eines einzigen Energiestosses oder mittels mehrerer aufeinanderfolgender Energiestösse erfolgen.

Als Energieträger für die stossweise Energiezufuhr haben sich insbesondere bewährt:
- Ultraschall (viermal 15 s, 600 W);
- Gleichstrom (viermal 15 s, 5 V/5 A = 25 W);
- Wechselstrom (viermal 15 s, 42 V/1,2 A = 50,4 W);
- Mikrowellen;
- Magnetismus;
- Laserstrahlen;
- Infrarotstrahlen; und
- Ultraviolettstrahlen.

Vorzugsweise erfolgt die Abkühlung bis zum Auftreten der durch das Freiwerden der Kristallisationswärme bedingten exothermen Reaktion; anschliessend wird das Gemisch vor dem Abtrennen der Metallverbindungen noch 2 bis 4 Minuten bei 0,5 bis 1 °C unterhalb dieser Temperatur gehalten.

Zweckmässigerweise beträgt die Kühlgeschwindigkeit im Kühlbehälter -0,3 bis -0,7 °C/Minute, vorzugsweise -0,5 °C/ Minute.

Das erfindungsgemässe Verfahren eignet sich insbesondere zur Behandlung der folgenden Medien:
- cyanidhaltige Zink-Elektrolyte;
- cyanidhaltige Kupfer- und Verkupferungs-Elektrolyte;
- cyanidhaltige Messing-Elektrolyte;
- cyanidhaltige Cadmium-Elektrolyte;
- cyanidhaltige Bronce-Elektrolyte;
- cyanidhaltige Silber- und Versilberungs-Elektrolyte;
- cyanidhaltige Abkoch- und Entfettungs-Elektrolyte;
- cyanidhaltige Zinn-Elektrolyte.

Es eignet sich auch zum Ausfrieren von:
- Eisenchlorid in salzsauren Beizbädern;
- Eisensulfat in schwefelsauren Beizbädern;
- Al(OH)₃;
- AlSO₄;
- Kaliumcarbonat; und
- Härtereiabwässern.

Als Rührer verwendet man zweckmässig den unter dem Handelsnamen "Viscojet" von der Viscojet AG, Basel (Schweiz) vertriebenen Langsam-Glockenrührer (vgl. CH-Patent 675 215), welcher bei einem Gefässdurchmesser von 50 cm und einem Rührerdurchmesser von 32 cm mit einer Drehzahl von 60 bis 100 min⁻¹, vorzugsweise 80 min⁻¹ betrieben wird. Dabei können keine grossen Kristalle, insbesondere keine Nadelkristalle entstehen.

Das erfindungsgemässe Verfahren bringt wesentliche technische, ökologische und ökonomische Vorteile, insbesondere:
- Da es Produktionsunterbrüche vermeidet, ermöglicht es eine optimale konstante Zusammensetzung des Mediums und eine längere Standzeit desselben und ergibt so eine konstante Produktequalität.
- Es ergibt eine geringe Verschleppung der erwünschten Inhaltsstoffe des Mediums und damit geringere Abwassermengen.
- Es ergibt einen reduzierten Stromverbrauch und einen geringeren Chemikalienverbrauch.
- Es finden an den Behälterwänden und am Rührer keine Ablagerungen statt.

Die abgeschiedenen Metallverbindungen sind sehr leicht mit kaltem Wasser rücklösbar. Bisher war die Rücklösung der auskristallisierten Metallverbindungen auch bei Verwendung von heissem Wasser, wenn überhaupt möglich, äusserst mühsam. Infolge der leichten Rücklösbarkeit entstehen kleinere Abwassermengen und geringere Arbeits- und Entsorgungskosten.

Bei der Entsorgung geht man zweckmässig so vor, dass man die gefällten Metallverbindungen rücklöst und aus der erhaltenen Lösung die geringen Mengen des mitgefällten Überzugsmetalls elektrolytisch abscheidet. Dabei werden etwa 80% der mitgefällten Cyanide zu Cyanat oxydiert. Gleichzeitig werden an der Kathode die Metall-Ionen zu Metall reduziert.

### Beispiel

Einem Bad mit salzsaurer Betriebsbeize mit einem Eisengehalt von 196 g/l werden 55 bis 60 l Badflüssigkeit entnommen und in einen Kühlbehälter von 50 cm Durchmesser und 35 cm Höhe gepumpt. Darauf wird das Rührwerk vom Typ "Viscojet 55 ST/v", welches einen Rührerdurchmesser von 32 cm aufweist, eingeschaltet und mit einer Rührerdrehzahl von 80 min⁻¹ betrieben.

Gleichzeitig wird die Kühlung eingeschaltet und so gesteuert, dass im Kühlbehälter, ausgehend von einer Anfangstemperatur 30 °C, eine Kühlgeschwindigkeit von -0,5 °C/Minute erzeugt wird. Bei einer Temperatur von -4,1 °C wurden vier Ultraschall-Energiestösse von je 15 s/600 W zugeführt. Dadurch setzt die Kristallisation ein. Gleichzeitig erfolgt, bedingt durch die freiwerdende Kristallisationswärme der gebildeten feinkörnigen Kristallsuspension, eine exotherme Reaktion, ein sog. "Temperatursprung", welche einen Temperaturanstieg auf -2,4 °C bewirkt. Nach 18 bis 20 min war die Temperatur wieder auf -2,8 °C gesunken und die Kristallisation beendet.

Anschliessend wird die erhaltene Kristallsuspension, in welcher die Kristalle eine Grösse von etwa 0,3 bis 0,4 mm aufweisen, unter weiterem Rühren abgelassen und mittels eines Filters von 0,2 mm Maschenweite abfiltriert. Es werden etwa 20 kg FeCl₂ erhalten.

Darauf wird die Vorrichtung, an deren Wandungen und Rührwerk sich keinerlei Ablagerungen befinden, gereinigt. Sie ist danach zur Behandlung einer neuen Charge bereit.

Zweckmässigerweise werden alle wesentlichen Vorgänge durch Niveauwächter, Temperaturfühler und Zeitschalter überwacht und durch entsprechende Steuergeräte automatisiert.

## Patentansprüche

1. Verfahren zum Entfernen von anorganischen Metallverbindungen, insbesondere von Salzen, Oxyden oder Hydroxyden, aus Lösungen durch Abkühlen der Lösung, dadurch gekennzeichnet, dass:
- der Lösung mindestens ein Teil ihrer Flüssigkeit entnommen wird;
- die entnommene Flüssigkeit in einem Kühlbehälter unter Rühren im Gebiet des metastabilen Bereiches bis zum möglichen Auskristallisieren der Metallverbindungen abgekühlt wird;
- der so abgekühlten Lösung zur Einleitung der Kristallisation stossweise Energie zugeführt wird;
- die auskristallisierten Metallverbindungen von der Flüssigkeit abgetrennt werden; und
- die abgetrennte Flüssigkeit in die Lösung zurückgeleitet wird.

2. Verfahren nach Anspruch 1, dadurch gekennzeichnet, dass als Energieträger für die stossweise Energiezufuhr Ultraschall, Gleichstrom, Wechselstrom, Mikrowellen, Magnetismus, Laserstrahlen, Infrarotstrahlen oder Ultraviolettstrahlen eingesetzt werden.

3. Verfahren nach Anspruch 1 oder 2, dadurch gekennzeichnet, dass die Abkühlung bis zum Auftreten der durch das Freiwerden der Kristallisationswärme bedingten exothermen Reaktion erfolgt und das Gemisch anschliessend vor dem Abtrennen der Salze bzw. Hydroxyde noch 2 bis 4 Minuten bei 0,5 bis 1 °C unterhalb dieser Temperatur gehalten wird.

4. Verfahren nach einem der Ansprüche 1 bis 3, dadurch gekennzeichnet, dass die Kühlgeschwindigkeit im Kühlbehälter -0,3 bis - 0,7 °C/Minute, vorzugsweise -0,5 °C/Minute, beträgt.
